# EUROPÄISCHE PATENTSCHRIFT

(11) **EP 1 472 121 B1**
(45) Veröffentlichungstag und Bekanntmachung des Hinweises auf die Patenterteilung: **21.09.2005**
(21) Anmeldenummer: 03702599.6
(22) Anmeldetag: 05.02.2003
(51) Int. Cl.: B60T 7/04, B60T 7/10, B60T 11/04

(54) **ARRETIERBARE SPANNVORRICHTUNG, INSBESONDERE FÜR EINE FESTSTELLBREMSANLAGE**
ARRESTABLE TENSIONING DEVICE, PARTICULARLY FOR A PARKING BRAKE SYSTEM
DISPOSITIF DE SERRAGE BLOCABLE, NOTAMMENT POUR UN FREIN DE STATIONNEMENT

(30) Priorität: 05.02.2002 DE 10204625
(43) Veröffentlichungstag der Anmeldung: 03.11.2004
(73) Patentinhaber: TRW Automotive Electronics & Components GmbH & Co. KG, 78315 Radolfzell (DE)
(72) Erfinder: VON DER HEIDE, Johann, 78713 Schramberg (DE)
(74) Vertreter: Röthinger, Rainer
(86) Internationale Anmeldenummer: PCT/EP2003/001129
(87) Internationale Veröffentlichungsnummer: WO 2003/066397

(56) Entgegenhaltungen:
- EP-A- 0 891 902
- DE-A- 19 751 659
- DE-A- 19 834 075
- US-A- 5 269 195

## Beschreibung

Die Erfindung betrifft eine arretierbare Spannvorrichtung mit einer Aktuatoreinrichtung, einem mit der Aktuatoreinrichtung gekoppelten Spannelement zum Ausführen einer Spannbewegung sowie einer lösbaren Arretiereinrichtung für das Spannelement, welche eine mit dem Spannelement gekoppelte erste Kontur und ein Arretierelement umfasst, das zum Arretieren des Spannelements mit der ersten Kontur zusammenwirkt.

Eine derartige Spannvorrichtung ist aus der DE 197 51 659 bekannt. Die dort beschriebene Spannvorrichtung ist Teil einer Feststellbremsanlage und dient zum Spannen von Bremsseilzügen der Feststellbremsen. Die bekannte Spannvorrichtung besitzt eine elektromotorisch oder mittels Muskelkraft betätigbare Aktuatoreinrichtung. Die Aktuatoreinrichtung ermöglicht ein Verschwenken oder Verdrehen eines als Rollensegment ausgebildeten und mit den Bremsseilzügen gekoppelten Spannelements. Die Außenkontur des Rollensegments ist eine Gesperreverzahnung und wirkt mit einer am Fahrzeugaufbau schwenkbar gelagerten, federbelasteten Rastklinke zusammen.

Zur Betätigung der Feststellbremsanlage verschwenkt die Aktuatoreinrichtung das Rollensegment unter Aufrollen des Zugseils. Das Rollensegment dreht sich dabei im Uhrzeigersinn ohne Hinderung durch die anliegende, aber nicht sperrende Rastklinke. Im festgestellten Zustand hingegen stützt sich das Rollensegment entgegen dem Uhrzeigersinn mittels der Gesperreverzahnung und der Rastklinge am Fahrzeugaufbau ab.

Zum Lösen der Feststellbremse wird eine zweite Aktuatoreinrichtung in Gestalt eines Handhebels betätigt, welcher mittels eines Löseseils mit der Sperrklinke gekoppelt ist. Ein Betätigen des Handhebels bewirkt, dass die Rastklinke die Gesperreverzahnung des Rollensegments freigibt. Das freikommende Rollensegment dreht unter dem Zug der Bremsseilzüge entgegen dem Uhrzeigersinn.

Der Erfindung liegt die Aufgabe zugrunde eine arretierbare Spannvorrichtung, beispielsweise für eine Feststellbremsanlage, anzugeben, welche einen vorteilhaften Lösemechanismus besitzt. Der Erfindung liegt weiterhin die Aufgabe zugrunde, ein geeignetes Verfahren zum Betreiben einer derartigen Spannvorrichtung anzugeben.

Erfindungsgemäß wird vorgeschlagen, eine Spannvorrichtung der eingangs genannten Art mit einem Nacheil-Element zu versehen, welches bei einer Bewegungsumkehr der ersten Kontur verzögert nachfolgt und dabei relativ zur ersten Kontur zwischen einer ein Zusammenwirken des Arretierelements mit der ersten Kontur ermöglichenden ersten Relativstellung und einer ein Zusammenwirken des Arretierelements mit der ersten Kontur verhindernden zweiten Relativstellung hin und her bewegbar ist. Die erste Kontur kann entweder am Spannelement selbst oder an einem mit dem Spannelement vorzugsweise Kraft aufnehmend gekoppelten Element ausgebildet sein.

Die Stellung des Nacheil-Elements relativ zur ersten Kontur hat Einfluss darauf, ob das Arretierelement mit der ersten Kontur z.B. rastend oder reibend zusammenwirken kann oder nicht. Verhindert das Nacheil-Element in der zweiten Relativstellung ein zusammenwirken (also z.B. einen Eingriff des Arretierelements in die erste Kontur), ermöglicht es gleichzeitig ein Lösen der Spannvorrichtung. Andererseits gestattet das Nacheil-Element in der ersten Relativstellung ein Zusammenwirken (z.B. den Eingriff des Arretierelements in die erste Kontur) und damit ein Arretieren der Spannvorrichtung.

Zum Umschalten zwischen den beiden Relativstellungen können Steuermittel vorgesehen werden. So ist es denkbar, als Steuermittel eine weitere, separate Aktuatoreinrichtung zu verwenden, um das Nacheil-Element relativ zur ersten Kontur und damit zwischen der ersten und der zweiten Relativstellung hin und her zu bewegen. Vorzugsweise wird das Umschalten jedoch von derjenigen Aktuatoreinrichtung initiiert, welche zum Betätigen des Spannelements vorgesehen ist. In diesem Fall ermöglicht daher ein und dieselbe Aktuatoreinrichtung sowohl das Spannen als auch das Lösen der Spannvorrichtung, so dass auf eine separate Löseeinrichtung wie beispielsweise den aus dem Stand der Technik bekannten Handhebel verzichtet werden kann.

Es sind unterschiedlichste Ausgestaltungen der Steuermittel denkbar, welche es gestatten, sowohl das Spannen als auch das Lösen der Spannvorrichtung mit ein und derselben Aktuatoreinrichtung zu bewerkstelligen. Beispielsweise können die Steuermittel mindestens zwei Komponenten, nämlich einerseits einen Mitnehmer und andererseits zwei, die beiden Relativstellungen definierenden Anschläge für den Mitnehmer, umfassen. Zweckmäßigerweise ist eine erste dieser Komponenten starr mit dem Nacheil-Element und eine zweite dieser Komponenten starr mit dem Spannelement und/oder der ersten Kontur gekoppelt. Die beiden Anschläge und der mit den Anschlägen zusammenwirkende Mitnehmer definieren ein gewisses Spiel zwischen dem Nacheil-Element und dem Spannelement bzw. der ersten Kontur und ermöglichen daher das verzögerte Nachfolgen des Nacheil-Elements. Es sind jedoch auch andere mechanische Lösungen denkbar, welche zu einem derartigen Spiel zwischen dem Nacheil-Element und dem Spannelement bzw. der ersten Kontur führen.

Das verzögerte Nachfolgen des Nacheil-Elements wird zweckmäßigerweise von einer bezüglich des Nacheil-Elements abbremsend wirkenden Verzögerungseinrichtung unterstützt. Die Verzögerungseinrichtung kann beispielsweise als Reibelement ausgebildet sein. So ist es möglich, ein Verzögerungselement mit einem gegen das Nacheil-Element vorgespannten Reibkörpers vorzusehen. Im einfachsten Fall kann das Reibelement jedoch auch von einer mit dem Nacheil-Element zusammenwirkenden Gehäusewandung gebildet sein. Die mit dem Nacheil-Element zusammenwirkenden Bereiche der Gehäusewandung können zusätzlich einer Oberflächenbehandlung wie beispielsweise einer Aufrauhung oder dem Aufbringen einer die Reibung erhöhenden Beschichtung unterzogen werden. Sofern das Nacheil-Element eine ausreichend hohe Massenträgheit aufweist, kann auf das Verzögerungselement auch verzichtet werden.

Gemäß einer vorteilhaften Ausgestaltung der Erfindung ist am Nacheil-Element eine zweite Kontur ausgebildet, an welcher sich das Arretierelement in der zweiten Relativstellung, in welcher ein Zusammenwirken des Arretierelements mit der ersten Kontur verhindert ist, abstützt. Diese zweiten Kontur kann zumindest abschnittsweise die selbe oder eine ähnliche Gestalt wie die erste Kontur besitzen. Außerdem ist es möglich, das Nacheil-Element und damit die zweite Kontur bezüglich der ersten Kontur derart anzuordnen, dass das Arretierelement zumindest in einer der beiden Relativstellungen gleichzeitig mit der ersten Kontur und der am Nacheil-Element ausgebildeten zweiten Kontur zusammenwirken kann. In diesem Fall entscheidet die Position der zweiten Kontur relativ zur ersten Kontur darüber, ob das Arretierelement mit der ersten Kontur zusammenwirken kann oder nicht.

Die erste Kontur kann z.B. eine glatte oder raue Gestalt oder die Gestalt einer Zahnung, vorzugsweise einer Gesperreverzahnung, haben. Die erste Kontur ist zweckmäßigerweise translatorisch beweglich oder rotatorisch beweglich oder schwenkbar ausgebildet. Vorzugsweise besitzt das Nacheil-Element die gleiche Form wie das die erste Kontur tragende Element. Ist die erste Kontur also beispielsweise an einer translatorisch beweglichen Zahnstange ausgebildet, so kann auch das Nacheil-Element die Form einer Zahnstange besitzen.

Das zum Arretieren mit der ersten Kontur zusammenwirkende Arretierelement kann als eine gegen die erste Kontur vorspannbare Reibstruktur oder Sperrklinke ausgestaltet sein. Vorzugsweise ist die Sperrklinke zumindest in der zweiten Relativstellung gegen die am Nacheil-Element ausgebildete zweite Kontur vorgespannt und ist die erste Kontur derart ausgebildet, dass die Sperrklinke in Eingriff mit der ersten Kontur gebracht werden kann.

Das Arretierelement wirkt mit der ersten oder sowohl der ersten als auch der zweiten Kontur zweckmäßigerweise selbstarretierend in dem Sinn zusammen, dass es eine Bewegung in die eine Richtung
gestattet, in eine andere, entgegengesetzte Richtung jedoch unterbindet. Eine derartige selbstarretierende Ausbildung der Arretiereinrichtung ist besonders vorteilhaft, wenn mittels ein und derselben Aktuatoreinrichtung sowohl das Spannen als auch das Lösen der Spannvorrichtung erfolgen soll. In diesem Fall ist es denkbar, zum Lösen der arretierten Spanneinrichtung das Spannelement mittels der Aktuatoreinrichtung zunächst kurzzeitig weiter in Spannrichtung zu betätigen und anschließend eine Bewegungsumkehr in Löserichtung zu gestatten, wodurch das Nachteil-Element in die zweite Relativstellung bewegt wird. In der zweiten Relativstellung verhindert das Nacheil-Element ein Zusammenwirken des Arretierelements mit der ersten Kontur.

Nach dem Lösen der Spannvorrichtung kann ein erneuter Spannvorgang durch Tätigen der Aktuatoreinrichtung in Spannrichtung, das heißt entgegen der Löserichtung, initiiert werden. Diese von der Aktuatoreinrichtung verursachte Bewegungsumkehr in Spannrichtung veranlasst das Nacheil-Element dazu, die erste Relativstellung anzunehmen. In der ersten Relativstellung kann das Arretierelement wieder mit der ersten Kontur zusammenwirken.

Weitere Ausgestaltungen und Vorteile der Erfindung ergeben sich aus den Ausführungsbeispielen und den Zeichnungen. Es zeigt:
- Fig. 1: eine erste Ansicht einer erfindungsgemäßen Spannvorrichtung für eine Fesstellbremsanlage;
- Fig. 2: eine zweite Ansicht der Spannvorrichtung gemäß Fig. 1; und
- Fig. 3a-e: schematische Darstellungen der Funktionsweise einer Arretiereinrichtung der in den Fig. 1 und 2 dargestellten Spannvorrichtung.

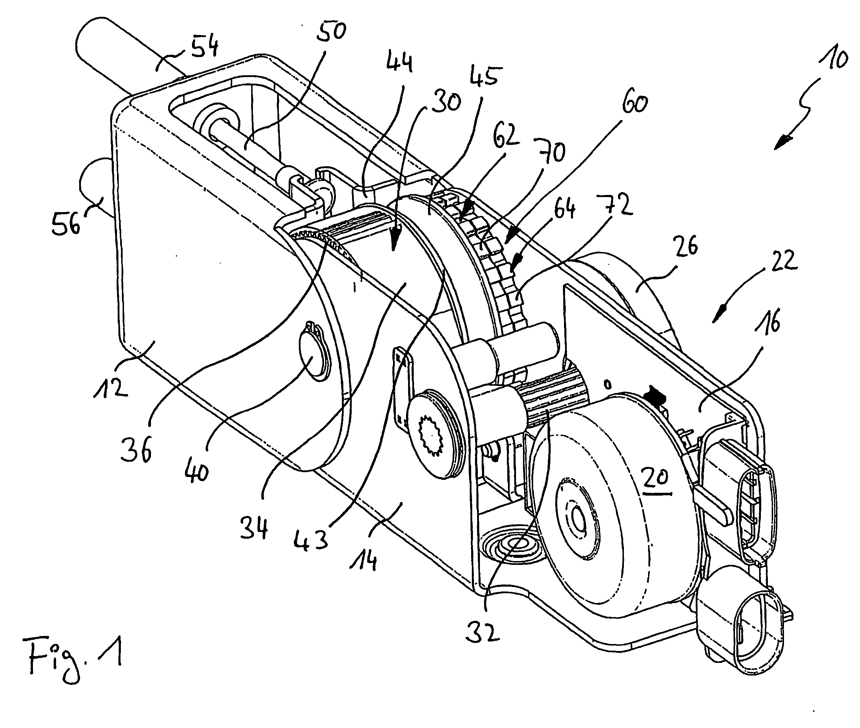

Nachfolgend wird unter Bezugnahme auf die Figuren 1, 2 und 3a-e ein Ausführungsbeispiel einer für eine Feststellbremsanlage konzipierten erfindungsgemäßen Spannvorrichtung näher erläutert. Die erfindungsgemäße Spannvorrichtung ist jedoch universell einsetzbar und eignet sich insbesondere auch für eine Verwendung im Zusammenhang mit Rückhaltesystemen und elektromotorischen Betriebsbremsen (EMB). Außerdem ist zu beachten, dass obwohl nachfolgend eine rotatorische Spannbewegung im Zusammenhang mit dem Aufwickeln eine Gurts beschrieben wird, translatorische oder schwenkende Spannbewegungen von der Erfindung ebenfalls mit umfasst sind.

In Fig. 1 ist beispielhaft eine erfindungsgemäße Spannvorrichtung 10 für eine Feststellbremsanlage dargestellt. Die Spannvorrichtung 10 umfasst ein aus zwei Teilen 12, 14 bestehendes Gehäuse. Innerhalb des Gehäuses ist eine Platine (printed circuit board, PCB) 16 aufgenommen. Die Platine 16 trägt einen bürstenlosen Schrittmotor 20 sowie eine in Fig. 1 nicht dargestellte Steuerschaltung (electric contol unit, ECU) für den Schrittmotor 20.

Im Ausführungsbeispiel fungiert der Schrittmotor 20 als (einzige) Aktuatoreinrichtung, welche sowohl ein Spannen als auch ein Lösen der Spannvorrichtung 10 gestattet. Grundsätzlich könnten alternativ oder zusätzlich auch mit Muskelkraft oder anderweitig betätigbare Aktuatoreinrichtungen zum Einsatz gelangen. Zudem wäre es denkbar, die in Fig. 1 dargestellte Aktuatoreinrichtung, das heißt den Schrittmotor 20, lediglich zum Spannen zu Verwenden und eine in Fig. 1 nicht dargestellten, separate Aktuatoreinrichtung für das Lösen vorzusehen.

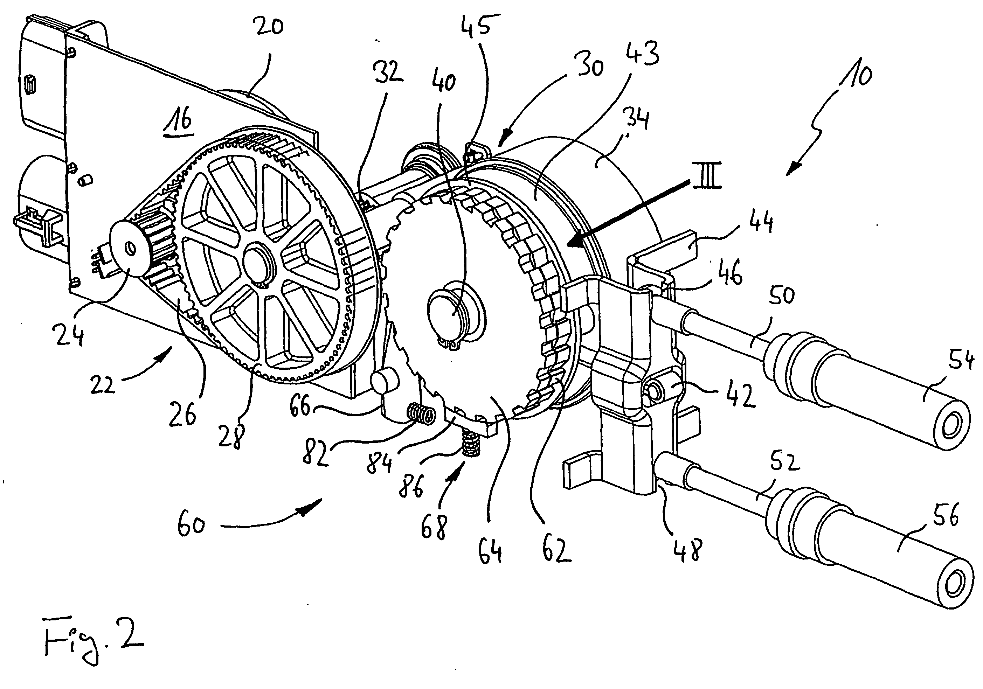

Dem in Fig. 1 dargestellten Schrittmotor 20 funktionell nachgeschaltet ist ein zweistufiges Getriebe, welches nachfolgend unter Bezugnahme auf eine Kombination von Fig. 1 und 2 näher erläutert wird. Das zweistufige Getriebe umfasst eine erste Getriebestufe in Gestalt eines als Riemenantrieb ausgebildeten Untersetzungsgewindes 22 mit einem von einer Abtriebswelle der Schrittmotors 20 angetriebenen kleinen Zahnrad 24, welches mittels eines Riemens 26 mit einem größeren Zahnrad 28 zusammenwirkt. Die zweite Getriebestufe 30 ist wie die erste Getriebestufe 22 ausgebildet und umfasst ein mit der Welle des großen Zahnrads 28 des ersten Untersetzungsgetriebe 22 identisches kleines Zahnrad 32, welche mittels eines Riemens 34 mit einem größeren Zahnrad 36 zusammenwirkt. Jede der beiden Getriebestufen 22, 30 besitzt ein Untersetzungsverhältnis von 1:5. Das resultierende Untersetzungsverhältnis beträgt demgemäß 1:25. Da der Schrittmotor 20 pro Umdrehung 28 Schritte macht, entspricht ein Schritt des Schrittmotors 20 einer Drehung einer mit dem großen Zahnrad 26 der zweiten Getriebestufe 30 gekoppelten Welle 40 von ungefähr 0,50.

Die mittels der beiden Gewindestufen 22, 30 mit dem Schrittmotor 20 gekoppelte Welle 40 fungiert als Spannelement und führt bei einer Betätigung des Schrittmotors 20 in Spannrichtung eine rotatorische Spannbewegung aus. In Folge dieser rotatorischen Spannbewegung wird ein drehfest mit der Welle 40 gekoppelter Gurt 42 auf die Welle 40 aufgewickelt. Für den Gurt 42 sind als Führung zwei zueinander parallele Kreisscheiben vorgesehen, welche drehfest mit der Welle 40 verbunden sind und den Gurt 42 auf beiden Seiten umgeben. Der Gurt 42 ist in Spannrichtung, das heißt in Fig. 1 nach rechts und in Fig. 2 nach links, mit einer innerhalb des Gehäuseabschnitts 12 translatorisch geführten Seilbrücke 44 gekoppelt. Die Seilbrücke 44 besitzt je eine Aufnahme 46, 48 für einen linken und einen rechten Bremsseilzug 50, 52. Die beiden Bremsseilzüge 50, 52 führen über entsprechende Seilführungen 54, 56 zu in den Figuren nicht dargestellten Feststellbremsen.

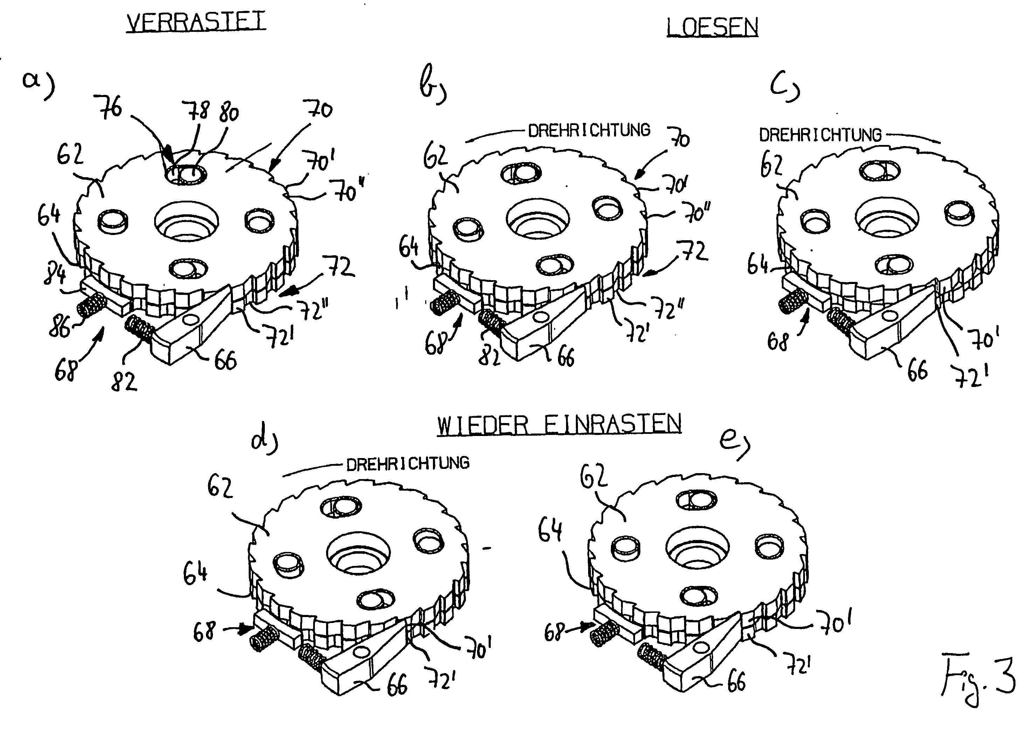

Ein wesentlicher Bestandteil der in den Figuren 1 und 2 dargestellten Spannvorrichtung 10 ist eine lösbare Arretiervorrichtung 60, welche nachfolgend unter ergänzender Bezugnahme auf die Figuren 3a-e näher erläutert wird. Die Figuren 3a-b zeigen eine Ansicht der Arretiereinrichtung 60 entlang des Pfeils III in Fig. 2.

Die in den Fig. 1, 2 und 3a-e dargestellte Arretiereinrichtung 60 umfasst zwei zueinander parallele Scheiben 62, 64, welche konzentrisch von der Welle 40 durchgriffen werden und von denen eine innere Scheibe 62 eine flächig an einer der Führungsscheiben für den Gurt 42 anliegt, sowie ein Arretierelement in Gestalt einer Sperrklinke 66 und eine Verzögerungseinrichtung 68 in Form eines Reibelements. Die bezüglich der Welle 40 innere Scheibe 62 der Arretiereinrichtung 60 ist drehfest mit der Welle 40 gekoppelt und besitzt radial außen eine gezahnte Kontur 70 in Gestalt von stumpfen Sägezähnen. Dies bedeutet, dass die Kontur 70 in Umfangsrichtung abwechselnd plateauartige Abschnitte 70' und Einschnitte 70" in Form rechtwinkliger Dreiecke besitzt.

Die bezüglich der inneren Scheibe 62 weiter außen auf der Welle 40 angeordnete äußere Scheibe 64 gleicht in ihrer Form der inneren Scheibe 62. Im Gegensatz zur inneren Scheibe 62 ist die äußere Scheibe 64 jedoch mit Spiel auf der Welle 40 gelagert. Dies bedeutet, dass die äußere Scheibe 64 bezüglich der Welle 40 und der drehfest mit der Welle 40 verbundenen inneren Scheibe 62 um einen definierten Winkelbereich drehbar ist, d.h. der inneren Scheibe 62 definiert nacheilt.

Der definierte Winkelbereich ist folgendermaßen gewählt Wie die innere Scheibe 62 besitzt auch die äußere Scheibe 64 eine gezahnte Außenkontur 72 mit Einschnitten 721' mit im wesentlichen rechteckigem Querschnitt und plateauartigen Abschnitten 721. Die Länge in Umfangsrichtung der plateauartigen Abschnitte 72' der äußeren Scheibe 64 entspricht im Wesentlichen der Länge der plateauartigen Abschnitte 721 sowie der Einschnitte 701' der inneren Scheibe 62. Der begrenzte Drehwinkel der äußeren Scheibe 64 bezüglich der inneren Scheibe 62 ist nun derart gewählt, dass das Spiel der äußeren Scheibe 64 bezüglich der inneren Scheibe 62 im Umfangsbereich der beiden Scheiben 62, 64 ungefähr der doppelten Plateaulänge entspricht.

Die Endpunkte des Spiels zwischen der äußeren Scheibe 64 und der inneren Scheibe 62 sind derart gewählt, dass in einer ersten Relativstellung die plateauartigen Abschnitte 72" der äußeren Scheibe 64 deckungsgleich mit den plateauartigen Abschnitten 70' der inneren Scheibe 62 angeordnet sind (Fig. 3b) und in einer zweiten Relativstellung die plateauartigen Abschnitte 72' der äußeren Scheibe 64 genau zwischen zwei plateauartigen Abschnitten der inneren Scheibe 62, also im Bereich der Einschnitte 70", angeordnet sind (Fig. 3c). Zum Umschalten zwischen diesen beiden Relativstellungen sind Steuermittel 76 vorgesehen. Die Steuermittel 76 umfassen zum einen eine Mehrzahl von zapfenartigen Mitnehmern, welche parallel zur Achse der Welle 40 verlaufen und sich von einer der inneren Scheibe 62 zugewandten Oberfläche der äußeren Scheibe 64 in Richtung auf die innere Scheibe 62 erstrecken. Die Mitnehmer 76 greifen in je ein Langloch 80, welches in der Oberfläche der inneren Scheibe 62 ausgebildet ist. Die insgesamt vier in der inneren Scheibe 62 ausgebildeten Langlöcher 80 fungieren als die zu den Mitnehmern 78 komplementären Komponenten der Steuermittel 76.

Die beiden gegenüberliegenden kurzen Seiten der Langlöcher 80 bilden jeweils einen Anschlag für den in dem jeweiligen Langloch 80 geführten Mitnehmer 78. Die Langlöcher 80 begrenzen daher einerseits den Winkelbereich, um welchen die äußere Scheibe 64 bezüglich der inneren Scheibe 62 drehbar ist, und definieren andererseits die oben erläuterten Anschläge, also die Positionen der ersten und der zweiten Relativstellung zwischen innerer Scheibe 62 und äußerer Scheibe 64.

Die unter Bezugnahme auf die Figuren 1, 2 und 3a-e erläuterten Steuermittel 76 in Form von in Langlöcher 80 greifenden Mitnehmern 78 sind lediglich als eine beispielhafte Ausgestaltung der Steuermittel zu verstehen. Eine andere Ausgestaltung der Steuermittel könnte beispielsweise darin bestehen, dass in der Welle 40 eine in Umfangsrichtung um einen begrenzten Winkelbereich verlaufende Nut ausgebildet ist, in welche ein mit der äußeren Scheibe 64 gekoppeltes zapfenartiges Element eingreift. Da die Nut nur über einen bestimmten Winkelbereich ausgebildet ist, weist sie zwei in Umfangsrichtung beabstandete Anschläge auf, welche mit dem zapfenartigen Element zusammenwirken, um ein begrenztes Spiel zwischen der äußeren Scheibe 64 und der Welle 40 zu definieren. Außerdem könnte daran gedacht werden, als Steuermittel eine weitere Aktuatoreinrichtung wie beispielsweise einen Servomotor einzusetzen, welcher ein Umschalten der äußeren Scheibe 64 bezüglich der inneren Scheibe 62 zwischen den beiden Relativstellungen gestattet. Die in den Figuren 1, 2 und 3a-e dargestellte Arretiereinrichtung 60 umfasst neben den beiden Scheiben 62, 64 die hebelartig ausgestaltete Sperrklinke 66, welche von einer Feder 82 gegen die Konturen 70, 72 der Scheiben 62, 64 vorgespannt ist. Die Sperrklinke 66 wirkt selbstarretierend mit der Kontur 70 der inneren Scheibe 62 zusammen. Dies bedeutet, dass in der ersten Relativstellung bei einer Bewegung der inneren Scheibe 62 in Spannrichtung die Sperrklinke 66 derart in die Einschnitte 70" der Kontur 70 einrastet, dass die gegenwärtige Zugspannung gehalten wird. Dabei wirkt die Sperrklinke 66 kraftaufnehmend mit der inneren Scheibe 62 zusammen. Mit anderen Worten, die momentan herrschende Zugspannung, welche im Ausführungsbeispiel als Drehmoment in die Welle 40 eingeleitet wird, wird von der Welle 40 auf die drehfest mit der Welle 40 gekoppelte innere Scheibe 62, von der inneren Scheibe 62 auf die Sperrklinke 66 und von der Sperrklinke 66 in den Fahrzeugaufbau eingeleitet.

Neben den beiden Scheiben 62, 64 und der Sperrklinke 66 umfasst die Arretiereinrichtung 60 die bereits erwähnte Verzögerungseinrichtung 68, welche abbremsend mit der als Nacheil-Element ausgebildeten äußeren Scheibe 64 zusammenwirkt. Im Ausführungsbeispiel umfasst die Verzögerungseinrichtung 68 einen Reibkörper 84, welcher von einer Feder 86 gegen die äußere Scheibe 64, genauer gesagt gegen die Außenkontur 72 der äußeren Scheibe 64, vorgespannt ist. Das Verzögerungselement 68 bewirkt eine gewisse Trägheit der äußeren Scheibe 64 bezüglich einer Bewegung der inneren Scheibe 62. Die Trägheit wiederum ist verantwortlich für das oben erläuterte Umschalten zwischen den beiden Relativstellungen von innerer Scheibe 62 und äußerer Scheibe 64.

Die Verzögerungseinrichtung 68 kann bezüglich der Darstellung in den Figuren um 90' versetzt angeordnet werden, so dass es nicht mit der Außenkontur 72 der äußeren Scheibe 64, das heißt nicht mit deren Stirnseite, sondern mit derjenigen Oberfläche der äußeren Scheibe 64 zusammenwirkt, welche der inneren Scheibe 62 abgewandt ist. Alternativ hierzu könnte die äußere Scheibe 64 unmittelbar mit der Innenwandung des zweiten Gehäuseabschnitts 14 (Fig. 1) derart zusammenwirken, dass die Reibung zwischen der dem Gehäuseabschnitt 14 zugewandten Oberfläche der äußeren Scheibe 64 und dem Gehäuseabschnitt 14 die äußere Scheibe 64 abgebremst. Im diesem Fall würde der zweite Gehäuseabschnitt 14 als Verzögerungseinrichtung fungieren.

Im Falle einer ausreichend hohen Massenträgheit der äußeren Scheibe 64 könnte die Verzögerungseinrichtung 68 sogar-ersatzlos entfallen. Zur Vergrößerung der Massenträgheit des äußeren Bauteils 64 kann daran gedacht werden, die Scheibendicke zu erhöhen oder die Scheibe aus einem Material mit hoher Dichte zu fertigen.

Nachfolgend wird unter Bezugnahme auf die Figuren 3a-e die Funktionsweise der in den Figuren 1 und 2 dargestellten erfindungsgemäßen Spannvorrichtung 10 näher erläutert. Es wird dabei davon ausgegangen, dass sich die Feststellbremsen in angezogenem Zustand befinden. Dies bedeutet, dass der Gurt 42 weitestgehend auf die Welle 40 aufgewickelt ist und die Welle 40 mit einem der Zugkraft entsprechenden hohen Drehmoment belastet ist. Das hohe Drehmoment wird von der sich in arretiertem Zustand befindenden Arretiereinrichtung 60 aufgenommen. Im arretierten Zustand befindet sich die Sperrklinke 66 in rastendem Eingriff in sowohl einen der Einschnitte 7011 der inneren Scheibe 62 als auch einen der Einschnitte 7211 der äußeren Scheibe 64. Die als Nacheil-Element fungierende äußere Scheibe 64 befindet sich daher in der oben erläuterten ersten Relativstellung bezüglich der inneren Scheibe 62. Dieser Zustand ist in Fig. 3a abgebildet.

Zum Lösen der Arretiereinrichtung 60 und damit der Spannvorrichtung 10 wird nun der Schrittmotor 20 derart betätigt, dass sich die Welle 40 geringfügig weiter in Spannrichtung bewegt. Unter Spannrichtung wird diejenige Richtung verstanden, welche eine weiteres Aufwickeln des Gurts 42 auf die Welle 40 bewirkt. Wie in Fig. 3b gezeigt, erfolgt das Weiterdrehen der Welle 40 in Spannrichtung lediglich so weit, dass die Sperrklinke 66 aus ihrer Verrastung in die Einschnitte 70", 72" der beiden Scheiben 62, 64 gehoben wird und auf den unmittelbar angrenzenden plateauartigen Abschnitten 70', 721 zum Liegen kommt. Von der Drehung der inneren Scheibe 62 aus der Position gemäß Fig. 3a in die Position gemäß Fig. 3b wird die äußere Scheibe 64 unmittelbar erfasst, da die Mitnehmer 78 an den der Spannbewegung zugeordneten Anschlägen der Langlöcher 80 bereits anliegen. Dies bedeutet, dass die äußere Scheibe 64 bezüglich der inneren Scheibe 62 in der einen Eingriff der Sperrklinke 66 in die Kontur 70 ermöglichenden Relativstellung verharrt.

Dies ändert sich jedoch, sobald die innere Scheibe 62, wie in Fig. 3c gezeigt, eine Bewegungsumkehr erfährt, das heißt entgegen der Spannrichtung bewegt wird. Bei der Bewegungsumkehr der inneren Scheibe 62 von der Spannrichtung gemäß Fig. 3b in die der Spannrichtung entgegengesetzte Löserichtung gemäß Fig. 3c verharrt die äußere Scheibe 64 nämlich aufgrund der mittels der Verzögerungseinrichtung 68 künstlich generierten Trägheit zunächst in der ursprünglichen Position, während die innere Scheibe 62 sich bereits geringfügig in Löserichtung bewegt. Die äußere Scheibe 64 wird von der Bewegung der inneren Scheibe 62 in Löserichtung erst dann erfasst, wenn sich die in der inneren Scheibe 62 ausgebildeten Langlöcher 80 bezüglich der Mitnehmer 78 soweit bewegt haben, dass die Mitnehmer 78 nunmehr mit den gegenüberliegenden Anschlägen der Langlöcher 78 zusammenwirken. Erst ab diesem Zeitpunkt wird die äußere Scheibe 64 von der Bewegung der inneren Scheibe 62 in Löserichtung erfasst.

Mit der anfänglichen Relativbewegung zwischen äußerer Scheibe 64 und innerer Scheibe 62 geht eine relative Verschiebung der den jeweiligen Scheiben 62, 64 zugeordneten Konturen 70, 72 einher. In der in Fig. 3c dargestellten zweiten Relativstellung zwischen äußerer Scheibe 64 und innerer Scheibe 62 sind die plateauartigen Abschnitte 72' der äußeren Scheibe 64 genau im Bereich der Einschnitte 70" der inneren Scheibe 62 angeordnet. Damit wird ein Eingriff der Sperrklinke 66 in die Einschnitte 7011 der Kontur 70 der inneren Scheibe 62 verhindert. Mit anderen Worten, in der zweiten Relativstellung stützt sich die Sperrklinke 66 an den plateauartigen Abschnitten 72' der äußeren Scheibe 64 ab und ist folglich daran gehindert, in die Einschnitte 70" der Kontur 70 der inneren Scheibe 62 einzurasten. Unter dem Zug der Bremsseilzüge 50, 52 kann sich die Welle 40 nunmehr in Löserichtung drehen, so dass sich die Feststellbremsen lösen.

Sofern es erforderlich ist, nach einer gewissen Zeit die Feststellbremsen erneut zu betätigen, wird der Schrittmotor 20 wieder derart angesteuert, dass sich die Welle 40 in Spannrichtung dreht. Dies entspricht einer Bewegungsumkehr, da sich die Welle 40 (unter Umständen einige Zeit vorher) in Löserichtung gedreht hat. In Folge der Trägheit der äußeren Scheibe 64 bleibt diese zunächst noch kurzzeitig stehen, während sich die innere Scheibe 62 bereits wieder in Spannrichtung bewegt. Erst wenn sich die Langlöcher 80 bezüglich der mit der äußeren Scheibe 64 gekoppelten Mitnehmer 78 soweit bewegt haben, dass diese in Spannrichtung in Anlage an die gegenüberliegenden Anschläge der Langlöcher gelangt sind, wird die äußere Scheibe 64 von der Bewegung der inneren Scheibe 62 in Spannrichtung erfasst, d.h. erst ab diesem Zeitpunkt folgt die äußere Scheibe 64 der inneren Scheibe 62 nach.

Wie Fig. 3d entnommen werden kann, nimmt zu diesem Zeitpunkt die äußere Scheibe 64 relativ zur inneren Scheibe 62 wiederum die einen Eingriff der Sperrklinke 66 in die Einschnitte 7011 der inneren Scheibe 72 ermöglichende ersten Relativstellung an. Die Rasteinschnitte 7011 werden also wieder freigegeben. Wie in Fig. 3e gezeigt, kann die Sperrklinke 66 daher wieder in rastenden Eingriff mit den Einschnitten 70", 72" der inneren Scheibe 62 und der äußeren Scheibe 64 gelangen. Aufgrund der selbstarretierenden Ausbildung der Arretiereinrichtung 60 kann der Antrieb gestoppt werden, das heißt der Schrittmotor 22 abgeschaltet werden, sobald die erforderliche Zugspannung erreicht ist. Als Maß für die erreichte Zugspannung kann die Stromaufnahme des Schrittmotors 22 herangezogen werden.

Da die Welle 40 im vorstehend erläuterten Ausführungsbeispiel eine rotatorische Spannbewegung zum Aufwickeln der Gurts 42 ausführt, wurde die Arretiereinrichtung 60 mit scheibenartigen Zahnrädern 62, 64 versehen. Eine gleichartige Funktionalität ließe sich jedoch beispielsweise mittels zweier translatorisch beweglicher Zahnstangen erzielen, deren Konturen den unter Bezugnahme auf die Fig. 3a erläuterten Konturen 70, 72 entsprechen. Eine solche Abwandlung der Arretiereinrichtung 60 wäre insbesondere bei translatorisch bewegtem Spannelement 40 sinnvoll. Es ist außerdem zu beachten, dass anstatt der gezahnten Konturen 70, 72 prinzipiell auch mehr oder weniger ebene Konturen, also z.B. glatte oder aufgeraute Konturen, verwendet werden könnten. In diesem Fall könnte das Zusammenwirken zwischen dem Arretierelement und diesen Konturen reibschlüssig erfolgen.

## Patentansprüche

1. Arretierbare Spannvorrichtung (10), insbesondere für eine Feststellbremsanlage, mit
- einer Aktuatoreinrichtung (20);
- einem mit der Aktuatoreinrichtung (20) gekoppelten Spannelement (40) zum Ausführen einer Spannbewegung; und
- einer lösbaren Arretiereinrichtung (60) für das Spannelement (40), welche eine mit dem Spannelement (40) gekoppelte erste Kontur (70) und ein Arretierelement (66) umfasst, das zum Arretieren des Spannelements (40) mit der ersten Kontur (70) zusammenwirkt;
**gekennzeichnet durch**
ein Nacheil-Element (64), welches bei einer Bewegungsumkehr der ersten Kontur (70) verzögert nachfolgt und dabei relativ zur ersten Kontur (70) zwischen einer ein Zusammenwirken des Arretierelements (66) mit der ersten Kontur (70) ermöglichenden ersten Relativstellung und einer ein Zusammenwirken des Arretierelements (66) mit der ersten Kontur (70) verhindernden zweiten Relativstellung hin und her bewegbar ist.

2. Spannvorrichtung nach Anspruch 1,
**dadurch gekennzeichnet, dass** Steuermittel (76) zum Umschalten zwischen den beiden Relativstellungen vorhanden sind.

3. Spannvorrichtung nach Anspruch 2,
**dadurch gekennzeichnet, dass** die Steuermittel (76) ein begrenztes Spiel zwischen dem Nacheil-Element (64) und der ersten Kontur (70) definieren.

4. Spannvorrichtung nach Anspruch 3,
**dadurch gekennzeichnet, dass** die Steuermittel (76) mindestens zwei Komponenten, nämlich einerseits einen Mitnehmer (78) und andererseits zwei, die beiden Relativstellungen definierende Anschläge (80) für den Mitnehmer (78), umfassen, wobei eine erste der Komponenten (76) starr mit dem Nacheil-Element (64) und eine zweite der Komponenten (80) starr mit dem Spannelement (40) oder der ersten Kontur (70) gekoppelt ist.

5. Spannvorrichtung nach einem der Ansprüche 1 bis 4,
**dadurch gekennzeichnet, dass** eine mit dem Nacheil-Element (64) abbremsend zusammenwirkende Verzögerungseinrichtung (68) vorhanden ist.

6. Spannvorrichtung nach Anspruch 5,
**dadurch gekennzeichnet, dass** die Verzögerungseinrichtung (68) ein Reibelement (84) umfasst.

7. Spannvorrichtung nach einem der Ansprüche 1 bis 6,
**dadurch gekennzeichnet, dass** am Nacheil-Element (64) eine zweite Kontur (72) ausgebildet ist, an welcher sich das Arretierelement (66) in der zweiten Relativstellung abstützt.

8. Spannvorrichtung nach einem der Ansprüche 1 bis 7,
**dadurch gekennzeichnet, dass** die erste Kontur (70) am Spannelement (40) selbst oder an einem kraftaufnehmend mit dem Spannelement (40) gekoppelten Element (62) ausgebildet ist.

9. Spannvorrichtung nach einem der Ansprüche 1 bis 8,
**dadurch gekennzeichnet, dass** wenigstens die erste Kontur (70) eine Zahnung ist.

10. Spannvorrichtung nach einem der Ansprüche 1 bis 9,
**dadurch gekennzeichnet, dass** wenigstens die erste Kontur (70) translatorisch oder rotatorisch beweglich oder schwenkbar ausgebildet ist.

11. Spannvorrichtung nach einem der Ansprüche 1 bis 10,
**dadurch gekennzeichnet, dass** das Arretierelement eine gegen die erste Kontur vorspannbare Sperrklinke (66) besitzt.

12. Verwendung einer Spannvorrichtung (10) nach einem der Ansprüche 1 bis 11 für eine Feststellbremsanlage.

13. Verfahren zum Betreiben der Spannvorrichtung (10) nach einem der Ansprüche 1 bis 11,
**dadurch gekennzeichnet, dass** die Arretiereinrichtung (60) selbsthemmend ausgebildet ist und mittels der Aktuatoreinrichtung (20) sowohl das Spannen als auch das Lösen der Spannvorrichtung (10) erfolgt.

14. Verfahren nach Anspruch 13,
**dadurch gekennzeichnet, dass** zum Lösen der Spannvorrichtung (10) das Spannelement (40) aus einem arretierten Zustand heraus um einen definierten Weg weiter in Spannrichtung und anschließend entgegen der Spannrichtung betätigt wird.

## Claims

1. An arrestable tensioning device (10), in particular for a parking brake system, comprising
- an actuating device (20);
- a tensioning element (40) coupled to the actuating device (20) for executing a tensioning motion; and
- a releasable arresting device (60) for the tensioning element (40), which arresting device comprises a first contour (70) coupled to the tensioning element (40) and an arresting element (66), which for arresting the tensioning element (40) interacts with the first contour (70);
**characterized by**
a lagging element (64), which upon a reversal of motion of the first contour (70) follows on after a time delay and in said case is movable relative to the first contour (70) back and forth between a first relative position enabling an interacting of the arresting element (66) with the first contour (70) and a second relative position preventing an interacting of the arresting element (66) with the first contour (70).

2. The tensioning device according to claim 1,
**characterized in that** control means (76) are provided for switching over between the two relative positions.

3. The tensioning device according to claim 2,
**characterized in that** the control means (76) define a limited play between the lagging element (64) and the first contour (70).

4. The tensioning device according to claim 3,
**characterized in that** the control means (76) comprise at least two components, namely, on the one hand, a driver (78) and, on the other hand, two stops (80) for the driver (78), which define the two relative positions, wherein a first of the components (76) is coupled rigidly to the lagging element (64) and a second of the components (80) is coupled rigidly to the tensioning element (40) or the first contour (70).

5. The tensioning device according to one of claims 1 to 4,
**characterized in that** a delay device (68) is provided, which interacts in a braking manner with the lagging element (64).

6. The tensioning device according to claim 5,
**characterized in that** the delay device (68) comprises a friction element (84).

7. The tensioning device according to one of claims 1 to 6,
**characterized in that** there is formed on the lagging element (64) a second contour (72), against which the arresting device (66) is supported in the second relative position.

8. The tensioning device according to one of claims 1 to 7,
**characterized in that** the first contour (70) is formed on the tensioning element (40) itself or on an element (62) coupled to the tensioning element (40) in such a way as to take up force.

9. The tensioning device according to one of claims 1 to 8,
**characterized in that** at least the first contour (70) is a tooth system.

10. The tensioning device according to one of claims 1 to 9,
**characterized in that** at least the first contour (70) is of a linearly or rotationally movable or pivotable design.

11. The tensioning device according to one of claims 1 to 10,
**characterized in that** the arresting element has a detent pawl (66), which may be biased towards the first contour.

12. Use of a tensioning device (10) according to one of claims 1 to 11 for a parking brake system.

13. A method of operating the tensioning device (10) according to one of claims 1 to 11,
**characterized in that** the arresting device (60) is of a self-arresting design and both the tensioning and the release of the tensioning device (10) are effected by means of the actuating device (20).

14. The method according to claim 13,
**characterized in that** for release of the tensioning device (10) the tensioning element (40) is actuated from an arrested state by a defined distance further in tensioning direction and then counter to tensioning direction.

## Revendications

1. Dispositif de serrage blocable (10), notamment pour un frein de stationnement, comprenant
- un dispositif actionneur (20),
- un élément de serrage (40) couplé au dispositif actionneur (20) pour effectuer un mouvement de serrage, et
- un dispositif de blocage (60) libérable pour l'élément de serrage (40), lequel dispositif comporte un premier profilé (70) couplé à l'élément de serrage (40) et un élément de blocage (66) coopérant avec le premier profilé (70) pour bloquer l'élément de serrage (40),
**caractérisé par**
un élément de retard (64) qui suit le mouvement à retardement lors du renversement du mouvement du premier profilé (70) et qui est apte à exécuter par rapport audit premier profilé (70) un mouvement alternatif entre une première position relative permettant la coopération de l'élément de blocage (66) et une deuxième position relative empêchant la coopération de l'élément de blocage (66) avec le premier profilé (70).

2. Dispositif de serrage selon la revendication 1,
**caractérisé en ce que** le passage d'une position relative à l'autre est assuré par des moyens de commande (76).

3. Dispositif de serrage selon la revendication 2,
**caractérisé en ce que** lesdits moyens de commande (76) déterminent un jeu limité entre l'élément de retard (64) et le premier profilé (70).

4. Dispositif de serrage selon la revendication 3,
**caractérisé en ce que** les moyens de commande (76) comportent au moins deux composants, notamment un doigt d'entraînement (78), d'une part, et deux butées (80) destinées au doigt d'entraînement (78) et déterminant les deux positions relatives, d'autre part, le premier des composants (76) étant couplé de manière rigide avec l'élément de retard (64) et le deuxième des composants (80) de manière rigide avec l'élément de serrage (40) ou le premier profilé (70).

5. Dispositif de serrage selon l'une des revendications 1 à 4,
**caractérisé en ce qu'**il est prévu un dispositif de retardement (68) coopérant avec l'élément de retard (64) de manière à obtenir un freinage.

6. Dispositif de serrage selon la revendication 5,
**caractérisé en ce que** le dispositif de retardement (68) comprend un élément de friction (84).

7. Dispositif de serrage selon l'une des revendications 1 à 6,
**caractérisé en ce que** l'élément de retard (64) est muni d'un deuxième profilé (72) sur lequel s'appuie l'élément de blocage (66) dans la seconde position relative.

8. Dispositif de serrage selon l'une des revendications 1 à 7,
**caractérisé en ce que** le premier profilé (70) est formé sur l'élément de serrage (40) même ou sur un élément (62) couplé par force à l'élément de serrage (40).

9. Dispositif de serrage selon l'une des revendications 1 à 8,
**caractérisé en ce que** pour le moins le premier profilé (70) est une denture.

10. Dispositif de serrage selon l'une des revendications 1 à 9,
**caractérisé en ce que** pour le moins le premier profilé (70) est formé de manière à se déplacer en translation ou en rotation ou à pivoter.

11. Dispositif de serrage selon l'une des revendications 1 à 10,
**caractérisé en ce que** l'élément de blocage possède un cliquet d'arrêt (66) apte à être précontraint contre le premier profilé.

12. Utilisation d'un dispositif de serrage (10) selon l'une des revendications 1 à 11 pour un frein de stationnement.

13. Procédé de fonctionnement du dispositif de serrage (10) selon l'une des revendications 1 à 11,
**caractérisé en ce que** le dispositif de blocage (60) est formé autobloquant et le dispositif actionneur (20) permet aussi bien le serrage que la libération du dispositif de serrage (10).

14. Procédé selon la revendication 13,
**caractérisé en ce que** l'élément de serrage (40) est, à partir d'un état bloqué, actionné de façon à poursuivre dans le sens de serrage sa course sur une longueur déterminée avant d'être actionné dans le sens opposé au sens de serrage pour libérer le dispositif de blocage (10).
